# EUROPEAN PATENT SPECIFICATION

(11) **EP 1 437 910 B1**
(45) Date of publication and mention of the grant of the patent: **01.04.2009**
(21) Application number: 03104091.8
(22) Date of filing: 05.11.2003
(51) Int. Cl.: H04W 4/14

(54) **A cellular radio communication system and method for call restoration or handover**
System und Verfahren zum Weiterreichen oder zur Wiederherstellung von Verbindungen in einem zellularen Funkkommunikationssystem
Système et procédé pour transfert ou restoration d' appels dans un système de radiocommunications cellulaire

(30) Priority: 30.12.2002 GB 0230299
(43) Date of publication of application: 14.07.2004
(73) Proprietor: MOTOROLA, INC., Schaumburg, IL 60196 (US)
(72) Inventor: Johur, Jason, Motorola Limited, Basingstoke RG22 4PD (GB)
(74) Representative: McCormack, Derek James

(56) References cited:
- EP-A2- 1 209 845
- WO-A2-96/09725
- US-A- 5 511 072
- SAMARAKOON M I ET AL: "Encrypted video over TETRA" 10 February 2000 (2000-02-10), , PAGE(S) 3-1 , XP006500066 * the whole document *

## Description

### Technical Field

The present invention relates to cellular radio communication systems.

### Background

Portable and mobile radios are normally arranged to communicate with one another through a base station (BS). The radios and the base station are referred to as a Private Mobile Radio (PMR) system. An example of such a system is the European Terrrestrial Trunked Radio (TETRA) PMR system. Mobile telephone systems have an analogous design.

In both mobile radio and mobile phone systems, the system's coverage area is normally subdivided into 'cells'. Each cell is a region served by a base station. A radio may communicate with another radio in the same or a different cell, via the base station. Several base stations therefore link together to form a radio communications network. A radio or phone can communicate with any other that is within communication range of one of the base stations of the network.

Such communication will also be used by third and fourth generation communication systems, referred to as '3G' and '4G' systems.

Henceforth the term 'mobile station' (MS) will be used to describe a portable or mobile radio or telephone that is capable of communication via a cellular communication system. Thus the term mobile station will cover portable- or mobile PMR radios, mobile telephones, and 3G or 4G communication devices, wirelessly linked lap-top computers, or wirelessly linked personal digital assistants (PDA).

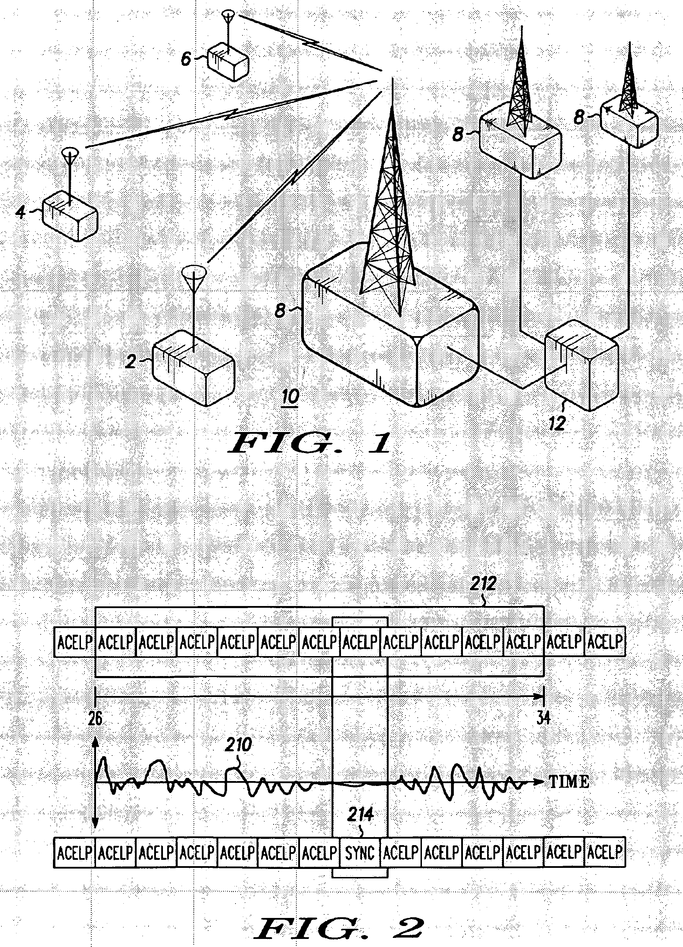

Figure 1 illustrates as an example the general scheme of a PMR radio system 10. Portable radios 2, 4 and 6 of figure 1 can communicate with a base station 8.

Radios 2, 4 and 6 could equally well be mobile radios mounted in vehicles. Each of the radios shown in figure 1 can communicate through base station 8 with one or more other radios. Several base stations 8 are all linked to a central controller 12. Calls may be routed via controller 12. If radios 2, 4 and 6 are capable of direct mode operation, then they may communicate directly with one another or with other radios, without the communication link passing through a base station 8. Cellular mobile phone systems, and 3G and 4G systems, have the same general arrangement as shown in Figure 1.

Portable and mobile radios are also known which can place calls through a base station to telephone subscribers. These calls may be between the radio and either a 'POTS' landline telephone, or a mobile telephone.

A mobile station in a radio communication system will normally be able to place or receive a call through the base station that is nearest to its current location. To enable movement between cells, each mobile station must clearly be able to establish communication with more than one base station. As base stations do not all operate on the same frequency, the mobile station must be able to communicate on a number of different frequencies.

Consider now a PMR radio that is making a call, in a particular cell of the radio communications system. Consider the radio moving geographically into the coverage range of a different cell, and needing to continue the call. To reestablish the call, the mobile must set up a communication link to the base station of the new cell, and be re-connected to the same call as before. This process is termed call restoration or handover. In some prior art systems, even if the systems are capable of reliable call restoration or handover, this process may take an appreciable time period. During this time period, critical information may be lost to the user of the mobile station. This fact might not be known to the other party in the call, e.g. if the mobile station is listening in to a call transmitting information from the console of a PMR system to a large number of mobile stations.

Some radio communication systems employ encryption of the transmitted signals. This encryption makes interception of a call by an unauthorised party significantly more difficult, and so enhances security.

Within TETRA radio communication systems, the end-to-end service is seen as an application layer service, using the underlying connectivity supplied by the standard TETRA infrastructure. The recognition by the transport layer of the presence of an end-to-end encryption service is achieved by the carrying of a flag associated with call control signalling. The flag indicates an end-to-end encrypted call.

Also in TETRA, in support of the service, a stolen frame data transport service is available to the encryption application. The end-to-end service uses this facility to transmit in-band synchronization data, also referred to as User-plane (or U-plane). This synchronization data is used to synchronise the decrypting Mobile Station (MS), and is typically sent at the start of a call, replacing the first few ACELP frames. This synchronisation data also occurs at periodic intervals after the start, approximately once per second. There may be some random variance in this timing, introduced due to the use of a voice activity detector in choosing the most appropriate frame to steal. Sending synchronization data more than once a second, during the call, will result in a noticeable degradation to audio quality.

Figure 2 shows the use of a voice activity detector to select a time point for a synchronisation signal. This is done by voice activity detection. Trace 210 shows the level of voice activity plotted against time. Box 212 shows the window of opportunity for stealing, in order to send synchronisation data. Frame 214 shows the insertion of synchronization information, in place of an ACELP speech frame. The line from '26' to '34' on figure 2 shows the number of ACELP frames since the last stealing occurrence.

When a mobile station is involved in restoration or handover of a call, the mobile station must wait for a SYNC frame and successfully process it, before end-to-end encrypted audio can be decoded. It may take a whole second for the next SYNC frame to be sent. Therefore, for end-to-end encrypted calls, a mobile station involved in restoration or handover of a call will experience larger additional handover delays. These handover delays appear as audio gaps.

The end-to-end encrypted audio is generated by the source vocoder. The source vocoder is part of the 'Switching and Management Infrastructure', otherwise called the 'SwMI', of the radio communication system.

Prior art patent application GB-A-2362783 (Motorola, Inc.) provides a mechanism for coping with infrastructure delay changes in a radio communications network. A signalling mechanism tells the transmitting party to send more synchronisation information. This prior art patent application deals with communication between two mobile stations. The system may recognise that there is delay in the network, e.g. because data packets from a transmitting mobile station arrive too late at a base station for timely transmission to a receiving mobile. The base station then alerts the receiving mobile. The message to the receiving mobile may be introduced as a packet in place of a packet which normally contains audio data. The system may contact the sending mobile, and request a new synchronisation sequence value.

US-A-5,511,072 describes a method of radio communication of data in which, in addition to user plane data from a primary source, data from a secondary source is sent in blocks on the same channel to provide intelligent traffic channel sharing in a TDMA system.

There is a need to minimise the time for which a mobile station is out of communication with the radio communication system. This applies at all times, but particularly during call restoration or handover.

### Summary of the Invention

The invention comprises a cellular radio communication system with the features of appended claim 1.The invention further comprises a method for call restoration or handover in accordance with appended claim 15. Further aspects of advantageous embodiments of the invention are apparent from the appended dependent claims.

The present invention speeds up call restoration or handover when a mobile station moves from one cell to another during a call. In a PMR radio system, the invention can be used with a variety of call types. These include console-to-group call, a call from the console to an individual mobile station, or a telephone interconnect call.

The present invention reduces the duration of the loss of audio by a receiving mobile station. This may be at the expense of an increased bandwidth requirement whilst audio and additional synchronisation frames are being sent at the same time.

### Brief description of the drawings

Figure 1 illustrates a cellular radio communication system;
Figure 2 illustrates frame stealing in a cellular radio communication system;
Figure 3 is a system diagram for a prior art arrangement;
Figure 4 is a mobile station in accordance with the invention;
Figure 5 is an illustration of user plane information in a system in accordance with the invention;
Figure 6 is a system diagram for an arrangement in accordance with the invention.

### Detailed description of the preferred embodiment

The inventor has considered that current cellular radio communication systems make the decision to replace ACELP with synchronisation information at the cryptographic device. Here:
(i) the cryptographic device provides signal encryption and synchronisation data, and is located in the SwMI software part of the controller 12;
(ii) 'ACELP' represents the technical abbreviation for circuit mode voice frames for the TETRA standard, which constitute part of the user-plane application information associated with a call;
(iii) the replacement mechanism is the frame stealing referred to in the 'background' section above.

However, the SwMI cryptographic device operates without information concerning some events in the radio communication system's network. In particular, if a mobile station performs call restoration or handover somewhere in the network, the cryptographic device will not have cognisance of this. The SwMI will continue to transmit SYNC at the usual "periodic" intervals defined for use during the call, see figure 2. This "periodic" interval does not lend itself for the purposes of the mobile station achieving synchronisation at the earliest opportunity.

A further consideration is that most existing infrastructures implementing End-to-End encryption have used circuit-based switching infrastructures. These infrastructures had a fixed bandwidth allocated for a particular call.

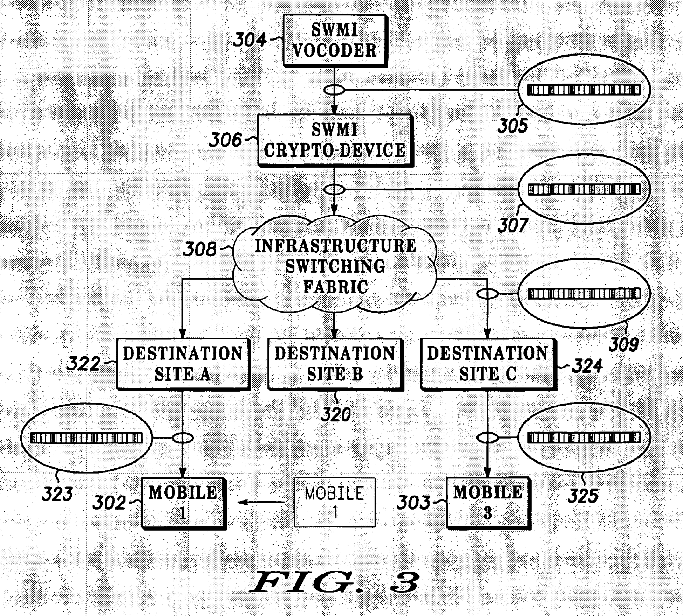

Figure 3 shows a prior art infrastructure functioning as generally described above. In figure 3, the SwMI vocoder is shown at 304, with the cryptographic device at 306. Infrastructure 308 transmits call information to base stations 322, 320, 324. When a mobile station 302 arrives within the coverage area of base station 322, it receives the same sync information as is being sent to mobile 303. Mobile 303 is a mobile in continuous communication with one base station, 324. With this prior art system, there is likely to be significant delay in call restoration or handover for mobile 302. This is apparent to the user of mobile 302 as part of the call being 'missed' or absent.

At point 305, the signal comprises ACELP frames only. At points 307,309,323 and 325, the signal comprises ACELP frames with SYNC frames periodically present. The prior art infrastructure makes a decision to replace, or steal, ACELP with SYNC information at the SwMI cryptographic device 306.

The present invention applies to SwMI vocoded calls that support call restoration or handover during the call. These are, for example, telephone interconnect calls, calls from the system's console to an individual mobile station, and calls from the console to a group of mobile stations. The invention is of particular benefit to these latter console-group calls.

The concept of this invention requires that the vocoder generate parallel "logical" application streams of information, for every associated TDMA frame dedicated to a particular 'End to End' call. This generation of parallel streams is required upon indication of call restoration or handover, cell re-selection, by a mobile station. These streams are:
(i) At least circuit mode voice, or circuit mode data, e.g. ACELP; and
(ii) End to End Encryption Synchronisation information, e.g. SYNC.

The present invention can reduce the duration of the loss of audio by a receiving mobile station. This may be at the expense of an increased bandwidth requirement whilst audio and additional synchronisation frames are being sent at the same time. An implementation of this invention may choose to prioritise the additional synchronisation information below the normal traffic stream such that the momentary increases in the bandwidth requirement, which cannot be satisfied because the sitelinks are completely utilised, do not jeopardise audio for the designated call or adjacent calls at the site.

In accordance with the invention, the base station may signal to the SwMI vocoder, using infrastructure signalling mechanisms, that call handover is occurring, or a call is being restored. In addition, destination base stations may then determine which of the two streams to transmit over the air to the mobile station. This arrangement effectively leaves the U-plane stealing decision to each of the sites involved in the End-to-End encrypted call. Clearly this differs from the prior art arrangement, where the SwMI vocoder determines when to steal. The prior art arrangement is forced to do this, because the SwMI in the prior art arrangement has no knowledge of when and where a mobile station is performing call restoration or handover.

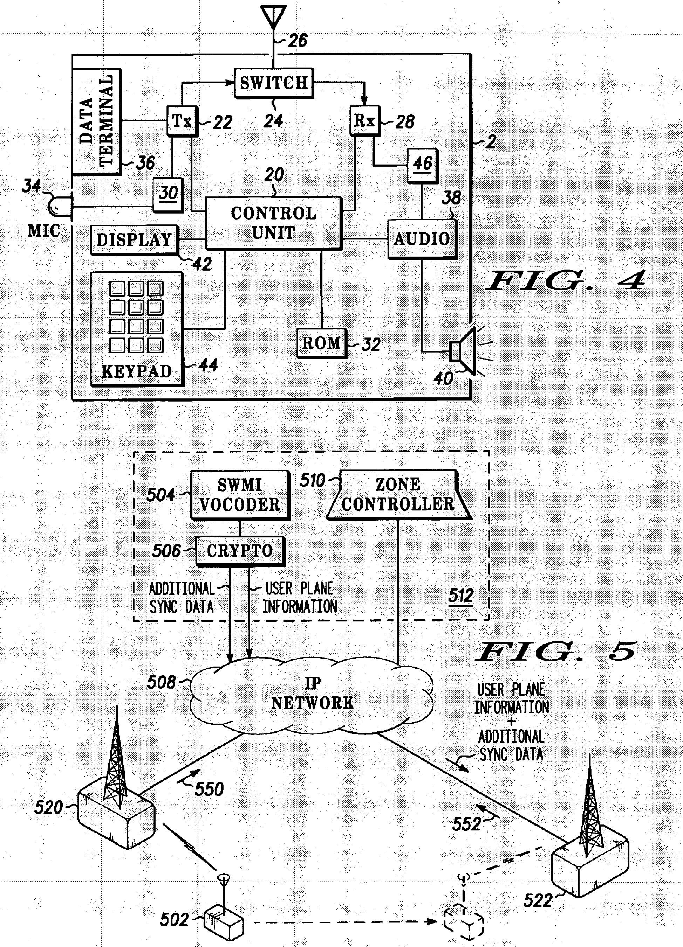

Figure 4 shows a mobile station that may be used with the present invention. Control unit 20, receiver circuit 28, transmission circuit 22, switch 24 and antenna 26 co-operate to provide transmission and reception of calls. Microphone 34 provides speech input for calls. Audio circuit 38 and loudspeaker 40 provide sound output. The display 42 and keypad 44 provide further parts of the user interface. ROM 32 provides permanent information storage, and may form the 'codeplug' of a PMR radio. Data terminal 36 allows data to form part of the call information. Cryptographic devices 30 and 46 provide transmission encryption and decryption respectively.

A detailed arrangement in accordance with the invention is shown in appended figure 5. In accordance with the invention, the cellular radio communication system comprises a controller 512, at least one base station 520, 522 and at least one mobile station 502. The controller 512 is adapted to generate user plane information for a call to at least one mobile station 502. When call restoration or handover is occurring for at least one mobile station 502, the controller is adapted to generate, temporarily, both user plane information for a call, and additional synchronization data.

When call restoration or handover is occurring, the base station may be adapted to perform frame stealing, in order to transmit the additional synchronization data to the mobile station. When call restoration or handover is occurring, the base station may be adapted to transmit the additional synchronization data, and not to transmit the user plane information.

Figure 5 shows two ways in which controller 512 may be made aware that call restoration or handover is occurring. These ways can be seen by reference to base stations 520 and 522 respectively. Firstly, base station 522 may be adapted to signal, 552, to controller 512 when a mobile station 502 registers with that base station, and the mobile station commences call restoration or handover with the base station. Alternatively, base station 520 may be adapted to signal, 550, to the controller 512 when a mobile station 502 performs cell re-selection with that base station.

One exemplary specific arrangement of controller 512 is shown in figure 5. Controller 512 here comprises a zone controller 510, SwMI vocoder 504 and cryptographic device 506.

The SwMI vocoder 504 may supply the parallel streams of user-plane information, representing circuit mode voice or circuit mode data, and additional end-to-end encryption synchronization data, to the site(s) involved with the call for either:
(i) a short period of time; or
(ii) until the mobile station indicates by some in-band means that it has achieved full crypto-synchronisation.

So, in a cellular radio communication system in accordance with the invention, the controller 512 is adapted to generate the additional synchronization data either only until indication by the mobile station of successful call restoration or handover, or for only a predetermined time period from the start of call restoration or handover.

The SwMI vocoder may chose to route both logical streams to all sites in the system associated with the call. This is particularly suited to packet-switched IP based infrastructures, where momentarily parallel circuit mode voice (e.g. ACELP) and additional end-to-end encryption synchronisation data streams are routed via the multicast IP "tree" to all the destination sites. Alternatively, the controller may chose to route both logical streams to just the sites performing call restoration or handover.

So, in a cellular radio communication system in accordance with the invention, the controller may be adapted to route the additional synchronization data only to base stations performing call restoration or handover. Alternatively, when a base station is not performing call restoration or handover, the base station itself may be adapted to transmit the circuit mode voice or circuit mode data, but not to transmit the additional end-to-end encryption synchronization data.

A destination site that is performing the call restoration or handover is thus able to choose to transmit the SYNC information provided, and ignore the ACELP, in order for the mobile station to gain synchronisation at the earliest opportunity. A destination site that is not performing the call restoration or handover, but that is receiving both streams of frames, is able to choose to ignore the additional SYNC information provided, since synchronisation is already achieved and no audio degradation is desired.

The user plane information for a call is normally circuit mode voice or circuit mode data, e.g. ACELP. The additional synchronization data is additional signalling for end-to-end encryption synchronization. This additional synchronization data may itself constitute part of the user-plane.

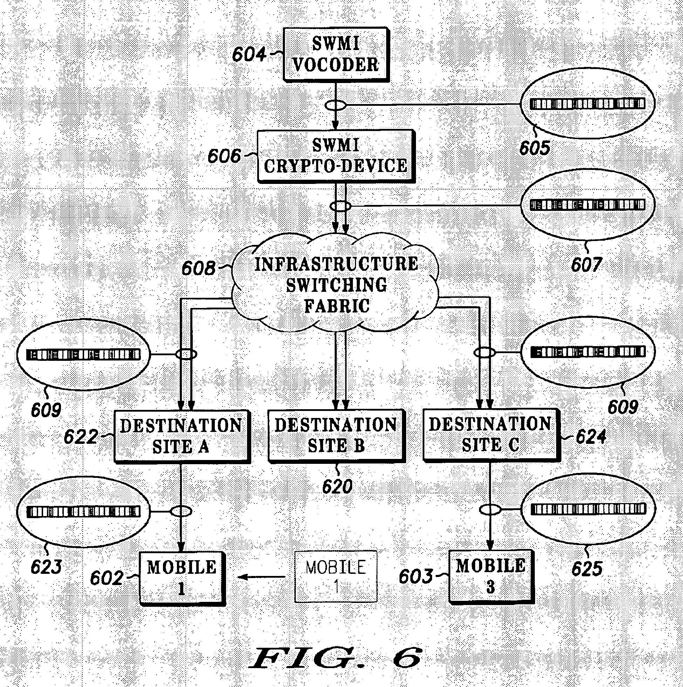

Figure 6 shows a radio communication system in accordance with the present invention, for direct comparison with prior art figure 3. Element 604 is the vocoder, and 606 is the cryptographic device. These provide the ACELP frames with periodic synchronisation for the call, plus the second stream, comprising the additional synchronisation data. The switching system 608 is analogous to 308 in figure 3.

Base station 622 is now able to transmit the additional synchronisation data to mobile 602, which enters its coverage area from that of base station 620. This provides more rapid call restoration or handover for mobile 602 than was possible for mobile 302 in figure 3.

Mobile 603 can continue to receive call information only, since base station 624 need only broadcast the call information to it.

At point 605, the signal comprises ACELP frames only. At points 607 and both points marked 609, the signal comprises ACELP frames with SYNC frames periodically present plus additional synchronisation frames. At point 623, the signal comprises, during call restoration or handover, synchronisation frames with higher priority than ACELP. At point 625, the signal comprises ACELP frames with synchronisation SYNC frames only periodically present. Thus, in the arrangement of the invention, the decision to replace or steal ACELP with End-to-End synchronisation information is left with the base station. This is possible, because the cryptographic device supplies dual parallel streams during call restoration.

### Use of the invention

The invention may be of particular advantage for an end-to-end encrypted console-to-group call, a call from the console to an individual mobile station, or a telephone interconnect call. The SwMI vocoder cryptographic device associated with the controller 12 may be adapted to provide the data streams. The cellular radio communication system may be compliant with the TETRA standard, and a packet switched IP infrastructure.

### Some effects of the invention

The effective parallel streaming technique of the invention will result in more information being sent between the SwMI-vocoder and destination site(s) across the switching fabric that constitutes the central network entity (CNE). However, this only occurs momentarily during these handover periods, and when an end-to-end encrypted call is being restored to a site.

Packet switched infrastructures, compared with circuit switched infrastructures, typically have spare capacity during normal load conditions. This is in order to be able to tolerate momentary increases in data rates. The SwMI vocoder implementation incorporating this invention could simply utilise the existing multicast IP tree to route both logical streams to the destination site(s).

Utilising the advantages of packet-based switching infrastructures, this invention allows the SwMI end-to-end encryption crypto-device to send parallel streams of audio and synchronisation data for momentary periods of time that correspond with an mobile station performing call restoration or handover on a new cell. The invention thus facilitates the destination base stations into making the more appropriate decision whether or not to transmit audio or synchronisation data to the mobile station. The inventor has determined that the base stations are the ideal place at which to make the decision to steal audio or to send synchronisation data to the mobile station, not the SwMI crypto-device.

This invention will provide optimal synchronisation performance concerning call handover of SwMI-vocoded end-to-end encryption calls, when using a packet-based switching infrastructure. The period that a mobile station may be considered out-of-sync with the SwMI is of major importance to users of the cellular radio communication system.

### Method of the invention

The invention comprises a method for call restoration or handover in a cellular radio communication system. In accordance with the method, the controller 512 generates user plane information for a call to at least one mobile station 502,602. When call restoration or handover occurs for the at least one mobile station, the controller generates, temporarily, both user plane information for a call and additional synchronization data.

Here again, the user plane information for a call is normally data and/or ACELP speech. The additional synchronization data is additional signalling for end-to-end encryption synchronization. This additional synchronization data may itself be in the user plane. However, this additional synchronisation data allows a mobile station in the system to achieve synchronisation immediately it arrives at a site and call restoration or handover is necessary.

The controller 512 may generate the additional synchronization data only until indication by the mobile station of successful call restoration or handover. Alternatively, the controller 512 may generate the additional synchronization data for only a predetermined time period.

When call restoration or handover is occurring, the base station may transmit the additional synchronization data, but not transmit the user plane information for the call. The base station may perform frame stealing in order to transmit the additional synchronization data. The controller 512 may route the additional synchronization data only to base stations 8 performing call restoration or handover.

## Claims

1. A cellular radio communication system which is a Terrestrial Trunked Radio, TETRA, system, the system comprising a controller (512), at least one base station (520, 522) and at least one mobile station (502), wherein:
the controller (512) is adapted to generate information for a call to at least one mobile station (502), the information for the call comprising user plane information; and **characterised in that**:
the at least one base station (520) is adapted to signal to the controller (512) that call restoration or handover is occurring for the at least one mobile station (502); the controller (512) is adapted to generate temporarily additional synchronisation data when call restoration or handover is occurring for the at least one mobile station (502); and the at least one base station (520, 522) is operable to receive the additional synchronisation data, to decide whether to send the additional synchronisation data to the at least one mobile station (502), and if the at least one base station (520, 522) so decides, to send the additional synchronisation data instead of user plane information by performing frame stealing.

2. A cellular radio communication system in accordance with claim 1, wherein the user plane information for the call is ACELP audio data.

3. A cellular radio communication system in accordance with claim 1 or claim 2, wherein the controller (512), is adapted to generate the additional synchronisation information only until receiving an indication by the mobile station of successful call restoration or handover.

4. A cellular radio communication system in accordance with claim 1 or claim 2, wherein the controller (512), is adapted to generate the additional synchronisation data for only a predetermined time period from the start of call restoration or handover.

5. A cellular radio communication system in accordance with any one previous claim wherein the at least one base station (520) is adapted to perform audio frame stealing when call restoration or handover is occurring in order to transmit the additional synchronisation data.

6. A cellular radio communication system in accordance with any one previous claim, wherein the cellular communication system comprises a plurality of base stations (520, 522) which perform the call restoration or handover, and wherein the controller (512) is adapted to route the additional synchronisation data only to the base stations (520, 522) performing the call restoration or handover.

7. A cellular radio communication system in accordance with any one of preceding claims 1 to 6, the cellular communication system comprising at least one base station (520, 522) which is operable, when not performing call restoration or handover, to receive the additional synchronisation information and to transmit the user plane information for the call, but not to transmit the additional synchronisation data.

8. A cellular radio communication system in accordance with any one previous claim, wherein the call is a console-to-group call, a call from the console to an individual mobile station, or a telephone interconnect call.

9. A cellular radio communication system in accordance with any one previous claim, wherein the call is an End-to-End encrypted call.

10. A cellular radio communication system in accordance with any one previous claim, wherein the controller (502) includes: (a) a SwMI vocoder adapted to generate the user plane information for the call and (b) a cryptographic device adapted to generate the additional synchronisation information.

11. A cellular radio communication system in accordance with any one previous claim which has a packet switched IP infrastructure.

12. A cellular radio communication system in accordance with any previous claim, wherein:
(a) the user plane information is ACELP audio data; and
(b) the additional synchronisation data represents additional application signalling constituting part of the user plane, for end-to-end encryption synchronisation.

13. A cellular radio communication system in accordance with any one previous claim, wherein the at least one base station (520, 522) is adapted to signal to the controller when a mobile station (502) registers with that base station and the mobile station commences call restoration or handover with the base station, and the controller is operable to generate additional synchronisation data in response and to send the additional synchronisation data to the at least one base station.

14. A cellular radio communication system in accordance with any previous claim, wherein the at least one base station (520, 522) is adapted to signal to the controller when a mobile station (502) performs cell reselection with that base station and the controller is operable to generate the additional synchronisation data and to send the additional synchronisation data to the base stations of sites performing the call restoration or handover.

15. A method for call restoration or handover in a cellular radio communication system which is a Terrestrial Trunked Radio, TETRA, system comprising a controller (512), at least one base station (520, 522) and at least one mobile station (502), the method including:
the controller (512) generating information for a call to at least one mobile station (502), the information for the call comprising user plane information; and **characterised by**:
the at least one base station (520) signalling to the controller (512) that call restoration or handover is occurring for the at least one mobile station (502); the controller (512) generating temporarily additional synchronisation data when call restoration or handover is occurring for the at least one mobile station (502); and the at least one base station (520, 522) receiving the additional synchronisation data, deciding whether to send the additional synchronisation data to the at least one mobile station (502), and if the at least one base station (520, 522) so decides, sending the additional synchronisation data instead .of user plane information by performing frame stealing.

16. A method in accordance with claim 15, wherein the controller (512) generates the additional synchronisation data only until indication by the mobile station (502) of successful call restoration or handover.

17. A method in accordance with claim 15 or claim 16, wherein the controller (512) generates the additional synchronisation data for only a predetermined time period.

18. A method in accordance with any one of claims 15 to 17 wherein, when call restoration or handover occurs, the base station performs frame stealing of audio frames in order to transmit the additional synchronization data.

19. A method in accordance with any one of claims 15 to 18, wherein the controller (512) routes the additional synchronization data only to base stations (520, 522) performing the call restoration or handover.

## Patentansprüche

1. Mobiltelefon-Funkkommunikationssystem, bei dem es sich um ein terrestrisches Bündelfunksystem (TETRA-System) handelt, wobei das System eine Steuerung (512), mindestens eine Basisstation (520, 522) und mindestens eine bewegliche Funkstelle (502) aufweist, wobei:
die Steuerung (512) dafür ausgelegt ist, Informationen in Bezug auf einen Anruf an zumindest eine bewegliche Funkstelle (502) zu generieren, wobei die Informationen in Bezug auf den Anruf benutzerbezogene Informationen umfassen; und **dadurch gekennzeichnet, dass**:
die mindestens eine Basisstation (520) dafür ausgelegt ist, der Steuerung (512) zu signalisieren, dass für die mindestens eine bewegliche Funkstelle (502) eine Anrufwiederherstellung oder -übergabe erfolgt; die Steuerung (512) dafür ausgelegt ist, vorübergehend zusätzliche Synchronisationsdaten zu generieren, wenn für die mindestens eine bewegliche Funkstelle (502) eine Anrufwiederherstellung oder -übergabe erfolgt; und die mindestens eine Basisstation (520, 522) so betrieben werden kann, um die zusätzlichen Synchronisationsdaten zu empfangen, um zu entscheiden, ob die zusätzlichen Synchronisationsdaten an die mindestens eine bewegliche Funkstelle (502) zu senden sind, und wenn die mindestens eine Basisstation (520, 522) so entscheidet, anstelle der benutzerbezogenen Informationen die zusätzlichen Synchronisationsdaten durch die Ausführung von Frame Stealing zu senden.

2. Mobiltelefon-Funkkommunikationssystem nach Anspruch 1, wobei es sich bei den benutzerbezogenen Informationen in Bezug auf den Anruf um ACELP-Audiodaten handelt.

3. Mobiltelefon-Funkkommunikationssystem nach Anspruch 1 oder Anspruch 2, wobei die Steuerung (512) dafür ausgelegt ist, die zusätzlichen Synchronisationsdaten erst dann zu generieren, wenn von der beweglichen Funkstelle eine Angabe über eine erfolgreiche Anrufwiederherstellung oder -übergabe empfangen worden ist.

4. Mobiltelefon-Funkkommunikationssystem nach Anspruch 1 oder Anspruch 2, wobei die Steuerung (512) dafür ausgelegt ist, die zusätzlichen Synchronisationsdaten nur für eine vorbestimmte Zeitspanne ab dem Beginn der Anrufwiederherstellung oder -übergabe zu generieren.

5. Mobiltelefon-Funkkommunikationssystem nach einem vorhergehenden Anspruch, wobei die mindestens eine Basisstation (520) dafür ausgelegt ist, ein Audio-Frame-Stealing auszuführen, wenn eine Anrufwiederherstellung oder -übergabe erfolgt, um die zusätzlichen Synchronisationsdaten zu übertragen.

6. Mobiltelefon-Funkkommunikationssystem nach einem vorhergehenden Anspruch, wobei das Mobiltelefon-Kommunikationssystem mehrere Basisstationen (520, 522) aufweist, die die Anrufwiederherstellung oder -übergabe ausführen, und wobei die Steuerung (512) dafür ausgelegt ist, die zusätzlichen Synchronisationsdaten nur an die Basisstationen (520, 522) weiterzuleiten, die die Anrufwiederherstellung oder -übergabe ausführen.

7. Mobiltelefon-Funkkommunikationssystem nach einem der vorhergehenden Ansprüche 1 bis 6, wobei das Mobiltelefon-Kommunikationssystem mindestens eine Basisstation (520, 522) aufweist, die, wenn keine Anrufwiederherstellung oder -übergabe ausgeführt wird, so betrieben werden kann, dass sie die zusätzlichen Synchronisationsdaten empfängt und die benutzerbezogenen Informationen in Bezug auf den Anruf überträgt, nicht aber die zusätzlichen Synchronisationsdaten überträgt.

8. Mobiltelefon-Funkkommunikationssystem nach einem vorhergehenden Anspruch, wobei der Anruf ein von einer Zentrale ausgehender Gruppenruf (engl.: *console-to-group call*), ein Anruf von der Zentrale (engl.: *console*) an eine einzelne bewegliche Funkstelle, oder ein Telefonzwischenverbindungsruf ist.

9. Mobiltelefon-Funkkommunikationssystem nach einem vorhergehenden Anspruch, wobei es sich bei dem Anruf um einen durchgehend verschlüsselten Anruf handelt.

10. Mobiltelefon-Funkkommunikationssystem nach einem vorhergehenden Anspruch, wobei die Steuerung (502) umfasst: (a) einen SwMI-Vocoder, der dafür ausgelegt ist, die benutzerbezogenen Informationen in Bezug auf den Anruf zu generieren, und (b) eine kryptografische Einheit, die dafür ausgelegt ist, die zusätzlichen Synchronisationsdaten zu generieren.

11. Mobiltelefon-Funkkommunikationssystem nach einem vorhergehenden Anspruch, welches eine paketvermittelte IP-Infrastruktur hat.

12. Mobiltelefon-Funkkommunikationssystem nach einem vorhergehenden Anspruch, wobei:
(a) die benutzerbezogenen Informationen ACELP-Audiodaten sind; und
(b) die zusätzlichen Synchronisationsdaten eine zusätzliche Applikationssignalisierung darstellen, die einen Teil der Benutzerebene bildet, und zwar für eine durchgehende Verschlüsselungssynchronisation.

13. Mobiltelefon-Funkkommunikationssystem nach einem vorhergehenden Anspruch, wobei die mindestens eine Basisstation (520, 522) dafür ausgelegt ist, der Steuerung zu signalisieren, wenn eine bewegliche Funkstelle (502) sich bei dieser Basisstation anmeldet und die bewegliche Funkstelle mit der Basisstation eine Anrufwiederherstellung oder -übergabe beginnt, und die Steuerung so betrieben werden kann, dass sie daraufhin zusätzliche Synchronisationsdaten generiert und die zusätzlichen Synchronisationsdaten an die mindestens eine Basisstation sendet.

14. Mobiltelefon-Funkkommunikationssystem nach einem vorhergehenden Anspruch, wobei die mindestens eine Basisstation (520, 522) dafür ausgelegt ist, der Steuerung zu signalisieren, wenn eine bewegliche Funkstelle (502) eine Zellenneuauswahl mit dieser Basisstation durchführt, und die Steuerung so betrieben werden kann, dass sie die zusätzlichen Synchronisationsdaten generiert und die zusätzlichen Synchronisationsdaten an die Basisstationen von Standorten sendet, an denen die Anrufwiederherstellung oder -übergabe ausgeführt wird.

15. Verfahren zur Anrufwiederherstellung oder -übergabe in einem Mobiltelefon-Funkkommunikationssystem, bei dem es sich um ein terrestrisches Bündelfunksystem (TETRA-System) handelt, das eine Steuerung (512), mindestens eine Basisstation (520, 522) und mindestens eine bewegliche Funkstelle (502) aufweist, wobei das Verfahren umfasst:
die Steuerung (512) generiert Informationen in Bezug auf einen Anruf an mindestens eine bewegliche Funkstelle (502), wobei die Informationen in Bezug auf den Anruf benutzerbezogene Informationen umfassen;
und **gekennzeichnet durch**:
die mindestens eine Basisstation (520) signalisiert der Steuerung (512), dass für die mindestens eine bewegliche Funkstelle (502) eine Anrufwiederherstellung oder -übergabe erfolgt; die Steuerung (512) generiert vorübergehend zusätzliche Synchronisationsdaten, wenn für die mindestens eine bewegliche Funkstelle (502) eine Anrufwiederherstellung oder -übergabe erfolgt; und die mindestens eine Basisstation (520, 522) empfängt die zusätzlichen Synchronisationsdaten und entscheidet, ob die zusätzlichen Synchronisationsdaten an die mindestens eine bewegliche Funkstelle (502) zu senden sind, und wenn die mindestens eine Basisstation (520, 522) so entscheidet, sendet sie die zusätzlichen Synchronisationsdaten anstelle der benutzerbezogenen Informationen **durch** die Ausführung eines Frame Stealing.

16. Verfahren nach Anspruch 15, wobei die Steuerung (512) die zusätzlichen Synchronisationsdaten erst dann generiert, wenn durch die bewegliche Funkstelle (502) eine Angabe über eine erfolgreiche Anrufwiederherstellung oder -übergabe erfolgt.

17. Verfahren nach Anspruch 15 oder Anspruch 16, wobei die Steuerung (512) die zusätzlichen Synchronisationsdaten nur für eine vorbestimmte Zeitspanne generiert.

18. Verfahren nach einem der Ansprüche 15 bis 17, wobei bei Auftreten einer Anrufwiederherstellung oder -übergabe die Basisstation ein Frame Stealing von Audio-Datenübertragungsblöcken ausführt, um die zusätzlichen Synchronisationsdaten zu übertragen.

19. Verfahren nach einem der Ansprüche 15 bis 18, wobei die Steuerung (512) die zusätzlichen Synchronisationsdaten nur an solche Basisstationen (520, 522) weiterleitet, die die Anrufwiederherstellung oder -übergabe ausführen.

## Revendications

1. Système de radiocommunication cellulaire qui est un système TETRA ("Terrestrial Trunked Radio), le système comprenant un contrôleur (512), au moins une station de base (520, 522) et au moins une station mobile (502), dans lequel :
le contrôleur (512) est adapté pour générer des informations pour un appel à destination d'au moins une station mobile (502), les informations pour l'appel comprenant des informations du plan utilisateur ; et **caractérisé en ce que** :
l'au moins une station de base (520) est adaptée pour signaler au contrôleur (512) qu'un rétablissement ou un transfert d'appel est en cours pour l'au moins une station mobile (502) ; le contrôleur (512) est adapté pour générer temporairement des données de synchronisation additionnelles lorsqu'un rétablissement ou un transfert d'appel est en cours pour l'au moins une station mobile (502) ; et l'au moins une station de base (520, 522) a pour fonction de recevoir les données de synchronisation additionnelles, décider si elle doit envoyer les données de synchronisation additionnelles à l'au moins une station mobile (502), et si l'au moins une station de base (520, 522) décide qu'elle le doit, envoyer les données de synchronisation additionnelles au lieu des informations du plan utilisateur, en effectuant un vol de trames.

2. Système de radiocommunication cellulaire selon la revendication 1, dans lequel les informations du plan utilisateur pour l'appel sont des données audio ACELP.

3. Système de radiocommunication cellulaire selon la revendication 1 ou la revendication 2, dans lequel le contrôleur (512) est adapté pour ne générer les informations de synchronisation additionnelles que jusqu'à ce qu'il reçoive de la station mobile une indication de réussite d'un rétablissement ou d'un transfert d'appel.

4. Système de radiocommunication cellulaire selon la revendication 1 ou la revendication 2, dans lequel le contrôleur (512) est adapté pour ne générer les données de synchronisation additionnelles que pendant une durée prédéterminée à partir du début du rétablissement ou du transfert d'appel.

5. Système de radiocommunication cellulaire selon l'une quelconque des revendications précédentes, dans lequel l'au moins une station de base (520) est adaptée pour effectuer un vol de trames audio lorsqu'un rétablissement ou un transfert d'appel est en cours, afin de transmettre les données de synchronisation additionnelles.

6. Système de radiocommunication cellulaire selon l'une quelconque des revendications précédentes, le système de communication cellulaire comprenant une pluralité de stations de base (520, 522) qui effectuent le rétablissement ou le transfert d'appel, et dans lequel le contrôleur (512) est adapté pour acheminer les données de synchronisation additionnelles uniquement vers les stations de base (520, 522) qui exécutent le rétablissement ou le transfert d'appel.

7. Système de radiocommunication cellulaire selon l'une quelconque des revendications 1 à 6, le système de communication cellulaire comprenant au moins une station de base (520, 522) qui a pour fonction, lorsqu'elle n'exécute aucun rétablissement ou transfert d'appel, de recevoir les informations de synchronisation additionnelles et de transmettre les informations du plan utilisateur pour l'appel, mais pas de transmettre les données de synchronisation additionnelles.

8. Système de radiocommunication cellulaire selon l'une quelconque des revendications précédentes, dans lequel l'appel est un appel d'une console vers un groupe, un appel de la console vers une station mobile individuelle, ou un appel d'interconnexion téléphonique.

9. Système de radiocommunication cellulaire selon l'une quelconque des revendications précédentes, dans lequel l'appel est un appel crypté de bout en bout.

10. Système de radiocommunication cellulaire selon l'une quelconque des revendications précédentes, dans lequel le contrôleur (502) comprend : (a) un vocodeur SwMI adapté pour générer les informations du plan utilisateur pour l'appel et (b) un dispositif cryptographique adapté pour générer les informations de synchronisation additionnelles.

11. Système de radiocommunication cellulaire selon l'une quelconque des revendications précédentes, qui a une infrastructure IP à commutation de paquets.

12. Système de radiocommunication cellulaire selon l'une quelconque des revendications précédentes, dans lequel :
(a) les informations du plan utilisateur sont des données audio ACELP ; et
(b) les données de synchronisation additionnelles représentent une signalisation d'application additionnelle constituant une partie du plan utilisateur, pour une synchronisation de cryptage de bout en bout.

13. Système de radiocommunication cellulaire selon l'une quelconque des revendications précédentes, dans lequel l'au moins une station de base (520, 522) est adaptée pour signaler au contrôleur lorsqu'une station mobile (502) s'enregistre auprès de cette station de base et qu'une station mobile commence un rétablissement ou un transfert d'appel avec la station de base, et le contrôleur a pour fonction de générer en réponse des données de synchronisation additionnelles et d'envoyer les données de synchronisation additionnelles à l'au moins une station de base.

14. Système de radiocommunication cellulaire selon l'une quelconque des revendications précédentes, dans lequel l'au moins une station de base (520, 522) est adaptée pour signaler au contrôleur lorsqu'une station mobile (502) exécute une resélection de cellule avec cette station de base, et le contrôleur a pour fonction de générer les données de synchronisation additionnelles et d'envoyer les données de synchronisation additionnelles aux stations de base des sites qui exécutent le rétablissement ou le transfert d'appel.

15. Procédé de rétablissement ou de transfert d'appel dans un système de radiocommunication cellulaire qui est un système TETRA ("Terrestrial Trunked Radio), comprenant un contrôleur (512), au moins une station de base (520, 522) et au moins une station mobile (502), le procédé comprenant l'étape dans laquelle :
le contrôleur (512) génère des informations pour un appel à destination d'au moins une station mobile (502), les informations pour l'appel comprenant des informations du plan utilisateur ; et **caractérisé par** les étapes dans lesquelles :
l'au moins une station de base (520) signale au contrôleur (512) qu'un rétablissement ou un transfert d'appel est en cours pour l'au moins une station mobile (502) ; le contrôleur (512) génère temporairement des données de synchronisation additionnelles lorsqu'un rétablissement ou un transfert d'appel est en cours pour l'au moins une station mobile (502) ; et l'au moins une station de base (520, 522) reçoit les données de synchronisation additionnelles, décide si elle doit envoyer les données de synchronisation additionnelles à l'au moins une station mobile (502), et si l'au moins une station de base (520, 522) décide qu'elle le doit, envoie les données de synchronisation additionnelles au lieu des informations du plan utilisateur, en effectuant un vol de trames.

16. Procédé selon la revendication 15, dans lequel le contrôleur (512) ne génère les données de synchronisation additionnelles que jusqu'à ce qu'il reçoive de la station mobile (502) une indication de réussite d'un rétablissement ou d'un transfert d'appel.

17. Procédé selon la revendication 15 ou la revendication 16, dans lequel le contrôleur (512) ne génère les données de synchronisation additionnelles que pendant une durée prédéterminée.

18. Procédé selon l'une quelconque des revendications 15 à 17, dans lequel, lorsqu'un rétablissement ou un transfert d'appel se produit, la station de base effectue un vol de trames audio afin de transmettre les données de synchronisation additionnelles.

19. Procédé selon l'une quelconque des revendications 15 à 18, dans lequel le contrôleur (512) achemine les données de synchronisation additionnelles uniquement vers les stations de base (520, 522) qui effectuent le rétablissement ou le transfert d'appel.
